# EUROPÄISCHE PATENTSCHRIFT

(11) **EP 0 819 312 B1**
(45) Veröffentlichungstag und Bekanntmachung des Hinweises auf die Patenterteilung: **11.08.1999**
(21) Anmeldenummer: 96905776.9
(22) Anmeldetag: 22.02.1996
(51) Int. Cl.: H01B 11/22

(54) **ENERGIEKABEL MIT LICHTWELLENLEITERN**
POWER CABLE WITH OPTICAL FIBERS
CABLE ELECTRIQUE A FIBRES OPTIQUES

(30) Priorität: 04.04.1995 DE 29505766 U
(43) Veröffentlichungstag der Anmeldung: 21.01.1998
(73) Patentinhaber: Felten & Guilleaume AG, 51063 Köln (DE)
(72) Erfinder: HEIDLER, Peter, D-51503 Rösrath (DE)
(86) Internationale Anmeldenummer: EP9600730
(87) Internationale Veröffentlichungsnummer: WO9631885

(56) Entgegenhaltungen:
- EP-A- 0 286 804
- DE-A- 2 627 817
- DE-A- 4 004 429
- DE-U- 8 915 240
- US-A- 5 189 718

## Beschreibung

Die Erfindung betrifft ein Energiekabel mit mehreren Energieadern und mit einer optischen Ader mit Zwickelfüllungen und einem gemeinsamen Kabelmantel. Ein solches Kabel ist in der DE 89 15 240-U1 beschrieben. Solche Kabel eignen sich jedoch nicht für Hausanschluß- oder Straßenbeleuchtungskabel, die auch über optische Leitungen miteinander angeschlossen werden sollen, weil der Lichtwellenleiter der optische Ader nahezu unzugänglich ist und nach heutigen Bedürfnissen möglichst jedem Anschluß mindestens ein Lichtwellenleiter ("LWL") zugeordnet werden soll. Mit zunehmender Verbreitung von digitalen Informationskanälen (ISDN-Technik) besteht das Bedürfnis, immer mehr Anschlußpunkte digital zu versorgen.

Es ist daher die Aufgabe der Erfindung ein Energiekabel anzugeben, welches als Hausanschluß- oder Straßenbeleuchtungskabel geeignet ist, mit dem eine hohe Zahl von Lichtwellenleitern zur Verfügung stehen und welches dennoch kompakt aufgebaut ist.

Die Aufgabe wird mit den Merkmalen des 1. Anspruchs gelöst. Vorteilhafte Weiterbildungen finden sich in den Unteransprüchen.

Mit dem Kabel steht in vorzüglicher Weise eine integrierte Lösung für Energie- und Informationsversorgung für eine Vernetzung zu Verfügung. Vorzugsweise könnte das Kabel als Energiekabel für Ortsnetze mit 1 kV Betriebsspannung eingesetzt werden. Je Anschlußpunkt könnte standardmäßig ein LWL-Röhrchen vorgesehen werden. Als Anschlußtechnik wird die Klemmringtechnik verwendet, bei der jeder Anschluß unter Spannung zugeschaltet werden kann. Die LWL werden nach bekannter Technik gespleißt und ihre Spleiße in speziellen Muffen untergebracht. Lichtleitfasern, die nicht einem Anschlußpunkt zugeordnet sind, werden an den Anschlußstellen vorbeigeführt.

Die Zahl der LWL-Röhrchen kann nach der Anschlußleistung gestaffelt sein. So würde ein Kabel mit 80 kW für 40 Anschlüsse eingesetzt werden, deren Verbraucher je 2 kW Anschlußleistung benötigen. Die Zahl der LWL pro LWL-Röhrchen richtet sich nach den Bedürfnissen, die vom Anschlußpunkt definiert werden. Der Innendurchmesser der LWL-Röhrchen kann zwischen 1 und 5 mm gewählt werden, so daß ab 2 LWL pro Röhrchen nach oben eine große Bandbreite von LWL in einem Röhrchen möglich und einsetzbar ist.

Der Kabelquerschnitt besteht vorzugsweise aus vier Sektoren. Eine andere Wahl der Aufteilung ist jedoch je nach Anwendungsfall möglich.

Alle Röhrchen sollten aus einheitlichem Material gefertigt sein. Es kommt Kunststoff oder Metall infrage. Bei der Wahl von Metall wird vorzugsweise Edelstahl vorgesehen.

Die Röhrchen sind vorzugsweise ohne Schlag verseilt. Dies hat den Vorzug, daß die einzelnen Röhrchen leicht zu trennen und zum Anschließen herausgenommen werden können. Alle Röhrchen sind unterschiedlich gekennzeichnet, so daß sie leicht identifiziert werden können.

Die Röhrchen sind gemeinsam ummantelt verseilt. Beispielsweise kann eine PETP-Folie, überlappend gewickelt, verwendet werden.

Die Leiterdrähte des konzentrischen Leiters sind wellenförmig angeordnet (CW-Schirm). Der konzentrische Leiter kann bei Anschlüssen ohne Verletzung angehoben und zur Seite gelegt werden, so daß der Zugang zu den Kabeladern frei ist.

Der konzentrische Leiter kann je nach Anwendungsfall als Nullleiter des Kabels oder als Kabelschirm verwendet werden.

Die Aderzwickelräume sind mit Trensen gefüllt. Vorzugsweise wird als Material Polypropylen gewählt. Je nach Anwendungsfall kann auch einer der Zwickelräume für einen Meldedraht oder für ein LWL-Röhrchen verwendet werden. Vorzugsweise wäre ein Aussenzwickel zu wählen, weil dort die Lichtleitfasern am besten erreichbar sind.

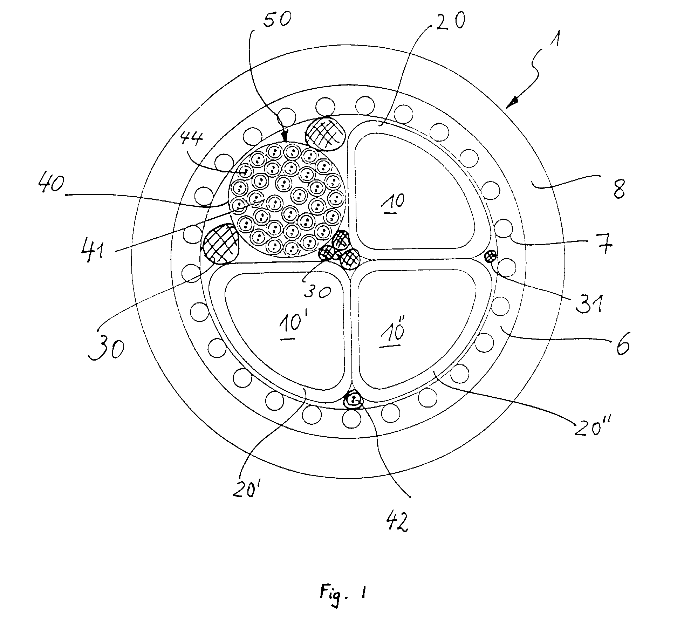

Die Erfindung wird mit der Figur näher beschrieben. Die Figur zeigt einen Querschnitt eines Viersektorenkabels 1.

Der Verseilverbund besteht aus drei eindrähtigen Sektorleitern 10,10',10" und der optischen Ader 50. Die Leiter können aus Aluminium, einer Aluminiumlegierung oder aus Kupfer bestehen. Die optische Ader ist als Bündelader aus einer Vielzahl (in der Figur zweiunddreißig) von Röhrchen 41 mit (in der Figur je zwei) Lichtwellenleitern 44 ausgeführt. Die Röhrchen der optischen Ader sind mit einer relativ dünnen Hülle 40 ummantelt. Die LWL in den Röhrchen sind in bekannter Weise eingelegt (mit Überlänge). Die Einbettung im Röhrchen könnte aus einer Petrolatfüllung bestehen.

Die Isolierung 20,20',20" der Leiter 10,10',10" besteht vorzugsweise aus PVC oder aus VPE. Die Aderzwickelräume sind mit Trensen 30,31 unterschiedlicher Dicke dicht gefüllt. In einem Außenzwickel liegt ein weiteres Röhrchen 42 mit zwei LWL.

Der Verseilverbund (10,10',10",50) ist mit einem Gummi-Innenmantel 6 umgeben, in den die Leiterdrähte des konzentrischen Leiters 7 eingebettet sind. Das Kabel hat außen einen PVC-Mantel 8. Der Außenmantel kann auch aus PE hergestellt werden.

Das in der Figur dargestellte Kabel entspricht keiner VDE- oder DIN-Norm. Nach der DIN-VDE-Terminologie entspricht es (N)AYCWY 3x185 SM/185 0,6/1kV + 32 LWL in Anlehnung an die VDE-Type NYCWY 4x185 SM/95 0,6/1kV. Als Anschlußkabel wäre ein Kabel des angelehnten Typs NAYCWY 4 x 50 qmm mit nur einem oder einer kleinen Zahl von LWL-Röhrchen (beispielsweise 2 oder 3 bei Mehrfamilienhäusern) denkbar. Bei diesem Typ würden die nötigen Lichtwellenleiter in die Zwickel gelegt; beispielsweise in Anlehnung nach VDE-Type NYY-J 4x25 RM 0,6/1kV.

## Patentansprüche

1. Energiekabel mit mehreren Energieadern (**10,10',10"**) und mit einer optischen Ader (**50**), mit Zwickelfüllungen (**30,31**) und einem gemeinsamen Kabelmantel (**8**), **dadurch gekennzeichnet,** daß der Kabelquerschnitt in gleiche Sektoren geteilt ist, daß in einem Sektor die optische Ader (**50**) als Bündel aus mehreren Röhrchen (**41**) liegt, die jeweils mindestens eine Lichtleiffaser (**44**) aufnehmen, daß in den anderen Sektoren die Energieadem als Sektorleiter (**10, 10',10"**) ausgebildet sind und daß ein aus mehreren wellenförmig gelegten Leiterdrähten (**7**) bestehender konzentrischer Leiter um die Sektoren (**10, 10',10",50**) herum angeordnet ist.

2. Energiekabel nach Anspruch 1, **dadurch gekennzeichnet,** daß der Kabelquerschnitt aus vier Sektoren besteht.

3. Energiekabel nach Anspruch 1 oder 2, **dadurch gekennzeichnet**, daß alle Röhrchen (**41,42**) aus Metall ausgebildet sind.

4. Energiekabel nach Anspruch 3, **dadurch gekennzeichnet,** daß die Metallröhrchen (**41,42**) aus Edelstahl bestehen.

5. Energiekabel nach Anspruch 1 oder 2, **dadurch gekennzeichnet**, daß alle Röhrchen (**41,42**) aus Kunststoff ausgebildet sind.

6. Energiekabel nach einem der vorhergehenden Ansprüche, **dadurch gekennzeichnet**, daß die Röhrchen (**41**) ohne Schlag verseilt sind.

7. Energiekabel nach einem der vorhergehenden Ansprüche, **dadurch gekennzeichnet,** daß die Röhrchen (**41**) gemeinsam ummantelt verseilt sind.

8. Energiekabel nach einem der vorhergehenden Ansprüche, **dadurch gekennzeichnet,** daß die Aderzwickelräume mit Trensen (**30,31**) gefüllt sind.

9. Energiekabel nach einem der vorhergehenden Ansprüche, **dadurch gekennzeichnet**, daß in mindestens einen Zwickel des Kabels ein Meldedraht oder ein weiteres Röhrchen (**42**) mit Lichtleitfasern (**44**) liegt.

## Claims

1. A power cable having several power leads (10, 10', 10") and having an optical lead (50), having interstitial dummy elements (30, 31) and a common cable sheath (8),
**characterised in that** the cable cross section is divided into equal sectors,
**in that** in one sector the optical lead (50) is in the form of a bunch of several tubes (41), which each house at least one glass fibre (44),
**in that** in the other sectors the power leads are constructed as sector conductors (10, 10', 10"),
**and in that** a concentric conductor, consisting of several conductor wires (7) laid in a wave shape, is disposed around the sectors (10, 10', 10", 50).

2. A power cable according to Claim 1,
**characterised in that** the cable cross section consists of four sectors.

3. A power cable according to Claim 1 or 2,
**characterised in that** all tubes (41, 42) are constructed from metal.

4. A power cable according to Claim 3,
**characterised in that** the metal tubes (41, 42) are made from high-quality steel.

5. A power cable according to Claim 1 or 2,
**characterised in that** all tubes (41, 42) are constructed from synthetic material.

6. A power cable according to one of the preceding Claims,
**characterised in that** the tubes (41) are stranded without lay.

7. A power cable according to one of the preceding Claims,
**characterised in that** the tubes (41) are stranded sheathed together.

8. A power cable according to one of the preceding Claims,
**characterised in that** the lead interstices are filled with dummy elements (30, 31).

9. A power cable according to one of the preceding Claims,
**characterised in that** a message wire or a further tube (42) with glass fibres (44) lies in at least one interstice of the cable.

## Revendications

1. Câble d'énergie comportant plusieurs conducteurs à énergie (10, 10', 10") et un conducteur optique (50), des bourrages (30, 31) et une enveloppe de câble commune (8), caractérisé en ce que la section transversale du câble est divisée en secteurs égaux, en ce que le conducteur optique (50) constitué d'un faisceau de plusieurs petits tubes (41) qui reprennent chacun au moins une fibre optique (44) est situé dans un secteur, en ce que dans les autres secteurs, les conducteurs d'énergie sont configurés en conducteurs (10, 10', 10") en forme de secteur et en ce qu'un conducteur concentrique constitué de plusieurs fils conducteurs (7) placés en forme d'ondulations est disposé autour des secteurs (10, 10', 10", 50).

2. Câble d'énergie selon la revendication 1, caractérisé en ce que la section transversale du câble est constituée de quatre secteurs.

3. Câble d'énergie selon les revendications 1 ou 2, caractérisé en ce que tous les petits tubes (41, 42) sont réalisés en métal.

4. Câble d'énergie selon la revendication 3, caractérisé en ce que les petits tubes métalliques (41, 42) sont réalisés en acier inoxydable.

5. Câble d'énergie selon les revendications 1 ou 2, caractérisé en ce que tous les petits tubes (41, 42) sont réalisés en matière plastique.

6. Câble d'énergie selon l'une des revendications précédentes, caractérisé en ce que les petits tubes (41) sont câblés sans torsadage.

7. Câble d'énergie selon l'une des revendications précédentes, caractérisé en ce que les petits tubes (41) sont câblés avec une enveloppe commune.

8. Câble d'énergie selon l'une des revendications précédentes, caractérisé en ce que les espaces prévus pour le bourrage entre les conducteurs sont remplis de bridons (30, 31).

9. Câble d'énergie selon l'une des revendications précédentes, caractérisé en ce qu'un fil de signalisation ou un autre petit tube (42) doté de fibres optiques (44) est placé dans au moins un bourrage du câble.
